# EUROPEAN PATENT APPLICATION

(11) **EP 4 585 927 A1**
(43) Date of publication of application: **16.07.2025**
(21) Application number: 23862800.2
(22) Date of filing: 19.07.2023
(51) Int. Cl.: G01N 35/04, G01N 35/02

(54) **CONTAINER STORAGE DEVICE, AUTOMATIC ANALYSIS SYSTEM, AND METHOD FOR RETRIEVING SAMPLE CONTAINER**

(30) Priority: 06.09.2022 JP 2022141337
(71) Applicant: HITACHI HIGH-TECH CORPORATION, Tokyo 105-6409 (JP); Roche Diagnostics GmbH, 68305 Mannheim (DE); F. Hoffmann-La Roche AG, 4070 Basel (CH)
(72) Inventor: JOJI, Akira, Tokyo 105-6409 (JP); MATSUDA, Yuki, Tokyo 105-6409 (JP); WATANABE, Yutaka, Tokyo 105-6409 (JP); CHIDA, Saori, Tokyo 105-6409 (JP); SASAKI, Shunsuke, Tokyo 105-6409 (JP); ALLWIN, Richard, 68305 Mannheim (DE); KLEMMER, Martina, 68305 Mannheim (DE); KLINSKI, Mirko, 68305 Mannheim (DE); DEGROOT, Peter, 6343 Rotkreuz (CH)
(74) Representative: MERH-IP Matias Erny Reichl Hoffmann Patentanwälte PartG mbB
(86) International application number: PCT/JP2023/026457
(87) International publication number: WO 2024/053256

(57) **Abstract**

A container storing device 101 connected to an automatic analyzer through a transportation path that transports a rack includes a storage 204 that stores specimen containers, a container transportation mechanism 208 that transfers the specimen containers between the storage and a rack 203, and a control unit. The transportation path transports the rack in a direction from the container storing device toward the automatic analyzer. The rack includes a plurality of container setting positions at which the specimen containers are to be set. After a plurality of taking-out target specimen containers in which specimens for which a measurement request has been made from the automatic analyzer are housed become capable of being taken out, the control unit decides taking-out priority regarding the plurality of taking-out target specimen containers and executes control such that the taking-out target specimen container having higher taking-out priority is mounted on the rack at the container setting position located more forward in a transportation direction of the transportation path. This reduces the burden on the user regarding specimen inputting and improves the measurement efficiency of the automatic analyzer.

## Description

### Technical Field

The present invention relates to a container storing device, an automatic analysis system, and a method of taking out specimen containers.

### Background Art

In general, a specimen is dispensed into a specimen container, and a plurality of specimen containers are mounted on a rack, which can transport the specimen containers, to be input to an automatic analyzer. If the specimen container is provided with an identification element such as a barcode, the automatic analyzer can automatically identify the specimen housed in the specimen container. Hence, the user can set the specimen container at any position in the rack.

Patent Document 1 discloses an automatic analyzer that makes a designation to a user on an operation screen regarding positions at which calibrators and controls necessary for measurement are to be disposed in a turn table or a rack, in accordance with specified order of priority, in a case in which the calibrators and the controls are not mounted in the turn table included in the automatic analyzer.

### Prior Art Document

### Patent Document

Patent Document 1: JP-2018-080957-A

### Summary of the Invention

### Problem to be Solved by the Invention

A container storing device is a device that stores specimens, and is composed mainly of a storing section and a transportation section. The container storing device has a storing function of storing specimen containers in which specimens are housed and an automatic transportation function of taking out a stored specimen and transporting it to an automatic analyzer. In accordance with a measurement request from the automatic analyzer connected, the container storing device automatically executes processing of transferring specimen containers in which specimens for which the measurement request has been made are housed, onto a rack for transportation, and taking out the specimen containers to the automatic analyzer.

Among the specimens are specimens required or recommended to be measured in specified order and specimens regarding which a plurality of specimens need to be consecutively measured. Here, if the container storing device mounts specimen containers to be transported to the automatic analyzer on the rack in freely-decided order and, in the automatic analyzer, identification elements given to the specimen containers transported by the rack are read anew and the specimen containers are rearranged in accordance with the order of dispensing by the automatic analyzer, there is a possibility that a transportation mechanism becomes complicated and the time required until specimens are dispensed after the rack has reached the automatic analyzer becomes long.

To avoid this, specimens are mounted on the rack in such order that the lowering of the measurement efficiency of the automatic analyzer is avoided, at the stage of taking-out of the specimens from the container storing device to the automatic analyzer, and the specimens are dispensed in the automatic analyzer simply in order of the setting on the rack. This can avoid the lowering of the measurement efficiency of the automatic analyzer and the lowering of the operation efficiency of an examination room.

In Patent Document 1, a designation is automatically made for a user regarding the setting positions at which calibrators and controls are mounted in the turn table or the rack. According to the exemplification of Patent Document 1, the setting positions for the calibrators are decided in order of an item number and in increasing order of the concentration, and the setting positions for the controls are decided in order of an item number. However, such criteria are insufficient in terms of the purpose of taking out specimens by the container storing device without lowering the measurement efficiency of the automatic analyzer. Further, mounting on the turn table or the rack is executed by manual work by a user in Patent Document 1.

### Means for Solving the Problem

A container storing device that is one aspect for solving the above-described problem is a container storing device connected to an automatic analyzer through a transportation path that transports a rack, the container storing device including a storage that stores specimen containers in which specimens to be measured by the automatic analyzer are housed, a container transportation mechanism that takes out the specimen containers from the storage onto the rack or houses the specimen containers from the rack into the storage, and a control unit that executes control to take out the specimen containers from the storage. The transportation path transports the rack in a direction from the container storing device toward the automatic analyzer. The rack includes a plurality of container setting positions at which the specimen containers are to be set. The control unit is configured to decide, after a plurality of taking-out target specimen containers in which specimens for which a measurement request has been made from the automatic analyzer are housed become capable of being taken out, taking-out priority regarding the plurality of taking-out target specimen containers and execute control such that the taking-out target specimen container having higher taking-out priority is mounted on the rack at the container setting position located more forward in a transportation direction of the transportation path.

### Advantages of the Invention

By transferring the specimen containers onto the rack in order according to the taking-out priority decided by the container storing device, the burden on the user regarding specimen inputting is reduced, and the measurement efficiency of the automatic analyzer is improved. Problems, configurations, and effects other than the above description are made apparent from description of the following embodiments.

### Brief Description of the Drawings

FIG. 1 is an outline diagram of an automatic analysis system including a container storing device.
FIG. 2 is a diagram depicting a basic configuration of the container storing device.
FIG. 3 is a flowchart of a container taking-out algorithm.
FIG. 4 is an outline diagram of a rack.
FIG. 5 is a data configuration example of a management database.
FIG. 6 is a flowchart of an algorithm of decision of taking-out priority of specimens on the basis of concentration information.
FIG. 7 is a flowchart of an algorithm of decision of the taking-out priority of specimens on the basis of measurement item information.
FIG. 8 is a flowchart of an algorithm of decision of the taking-out priority of specimens on the basis of the remaining amount.
FIG. 9 is a flowchart of an algorithm of decision of the taking-out priority of specimens for each transportation destination module.

### Modes for Carrying Out the Invention

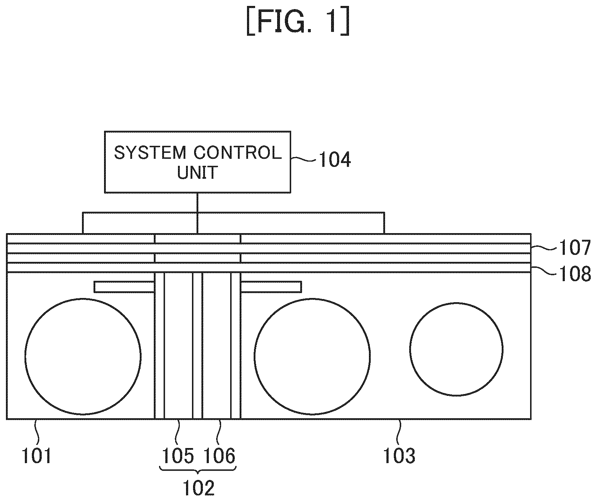

An outline of an automatic analysis system including a container storing device is depicted in FIG. **1****. A** container storing device 101 stores specimens to be measured by an automatic analyzer 103. Specimen containers in which specimens as measurement targets are housed are mounted on a rack and are taken into the automatic analysis system via a taking-in path 105 of a container taking-in/out device 102. The taken-in rack is recognized in the container taking-in/out device 102 and is transported to the automatic analyzer (module) 103 by a transportation path 107. The rack transported to the container storing device 101 is transported via the transportation path 107 and a transportation path 108. Moreover, also in the case of measuring specimens stored in the container storing device 101, the rack on which specimen containers in which the specimens as the measurement targets are housed are mounted is moved back and forth between the container storing device 101 and the automatic analyzer 103 by use of the transportation path 107 and the transportation path 108. The rack taken out from the automatic analysis system is transported to a taking-out path 106 of the container taking-in/out device 102 via the transportation path 107 and the transportation path 108 and is taken out to the outside of the automatic analysis system. It is to be noted that the number and the arrangement of devices combined as the automatic analysis system are not limited to those depicted in FIG. 1 as an example. For example, the automatic analysis system may include a plurality of automatic analyzers (modules).

The container storing device 101, the container taking-in/out device 102, and the automatic analyzer 103 are controlled by a system control unit 104. The system control unit 104 has a display section that displays information to a user, an accepting section that accepts operation from the user, and a control section that outputs a control instruction according to the operation from the user, to the container storing device 101, the container taking-in/out device 102, or the automatic analyzer 103.

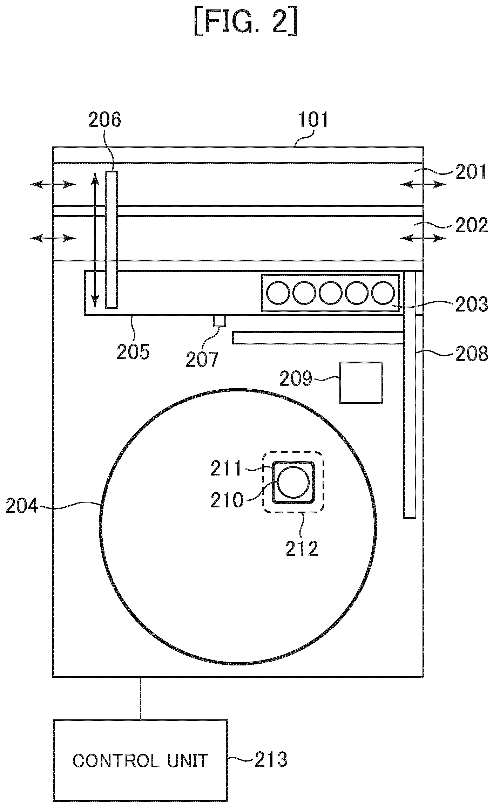

A basic configuration of the container storing device 101 is depicted in FIG. 2. The container storing device 101 has transportation paths 201 and 202 that take in or take out a rack 203 on which specimen containers are mounted, by forming the transportation paths 107 and 108 by being coupled to transportation paths of another device configuring the automatic analysis system. The transportation paths 201 and 202 each transport the rack 203 in one predetermined direction. Here, the transportation path 201 is described as a taking-in path that takes in the rack 203 from the automatic analyzer 103 to the container storing device 101, and the transportation path 202 is described as a taking-out path that takes out the rack 203 from the container storing device 101 to the automatic analyzer 103.

The container storing device 101 has a mounting path 205 for mounting specimen containers on the rack 203 from a storage 204. The mounting path 205 also includes a mechanism that transports the rack 203. The rack 203 moves between the transportation path 201 or 202 and the mounting path 205 by using a transportation mechanism 206. The mounting path 205 includes an identification information reading device 207 for reading identification information of the rack 203.

For the rack 203 that has arrived at the mounting path 205, a container transportation mechanism 208 executes housing of specimen containers from the rack 203 into the storage 204 or taking-out of specimen containers from the storage 204 onto the rack 203. In the housing and the taking-out of specimen containers by the container transportation mechanism 208, identification information of the specimen containers is read by an identification information reading device 209 for reading the identification information of the specimen containers.

The storage 204 has a plurality of container housing places 210 to house specimen containers. Further, the storage 204 has a lid having an opening 211 therein and a shutter 212 having an opening/closing function, and keeps the state in the storage 204 constant.

The container storing device 101 has a control unit 213 that accepts a specimen taking-out request from the automatic analysis system, selects specimen containers to be taken out from the storage 204, and operates the respective mechanisms to control taking-out and taking-in of the specimen containers. The control unit 213 controls each mechanism operation of the container storing device 101. It is to be noted that the control unit 213 does not need to be used exclusively for the container storing device 101 and, for example, the system control unit 104 of the automatic analysis system may be shared.

Each specimen container includes an identification element having identification information for uniquely identifying the specimen housed therein. Examples of this identification element include a barcode and the like. The identification information of the identification element is transmitted to the control unit 213, and the specimen container in which the specimen for which the taking-out request has been accepted is housed is identified.

The storage 204 may have either a disc shape or a rack shape. The container housing places 210 set in the storage 204 may be, for example, arranged in a circular circumferential manner with respect to the storage or may be arranged to be aligned in vertical and horizontal directions. Further, a container may directly be set at a container housing place 210, or may be set with the interposition of a container cover or the like. A configuration for keeping the state of the specimens housed in the specimen containers is included in the storage 204. Examples of the configuration for keeping the state include a cold storage unit and the like. A cover or the like may be mounted for the storage 204 for keeping these effects.

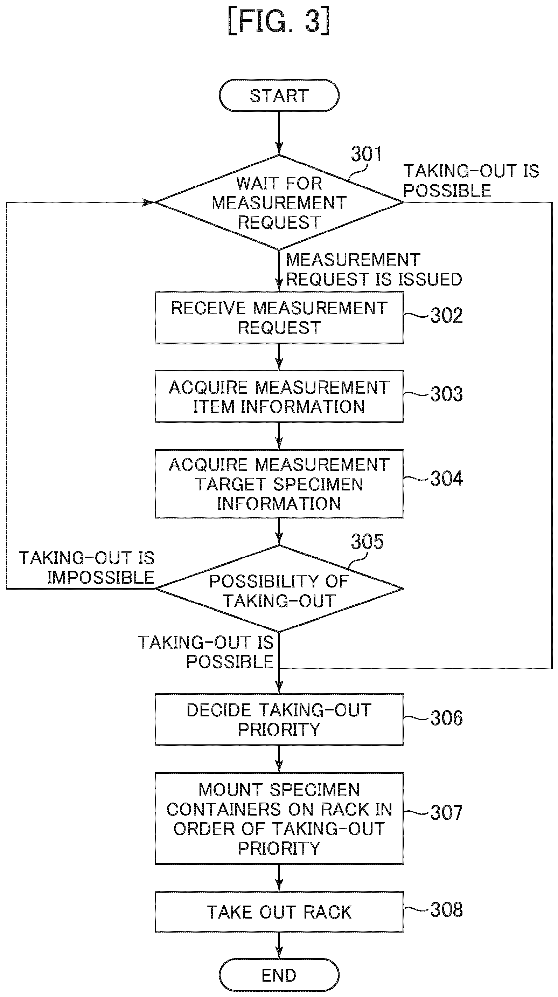

In the container storing device 101 of the present embodiment, the specimen containers are automatically transferred from the storage 204 onto the rack 203 in decreasing order of taking-out priority of the specimens, and the rack 203 is taken out to the automatic analyzer 103. FIG. 3 is a flowchart of a container taking-out algorithm executed by the control unit 213.

A step 301 represents waiting for the occurrence of a measurement request from the automatic analysis system for the specimens stored by the container storing device 101. When the measurement request does not occur, the container storing device 101 waits in the step 301. When the automatic analyzer 103 has issued the measurement request for the specimens stored in the container storing device 101, the container storing device 101 receives this measurement request by the control unit 213 (step 302). The control unit 213 acquires measurement item information from the received measurement request (step 303), and subsequently acquires specimen information as the measurement target (step 304). Next, a determination is made about whether it is possible to take out, from the container storing device 101, the rack on which the specimen containers (taking-out target specimen containers) housing the specimens for which the measurement request has been made are mounted (step 305). The determination criterion is not limited to any particular one. For example, it is determined that taking-out is possible when the maximum number of specimen containers that can be set on the rack has been reached or when a predetermined time has elapsed from reception of the first measurement request.

When it is determined that taking-out is impossible, the container storing device 101 waits again in the measurement request waiting state (step 301). In contrast, when it is determined that taking-out is possible (including also when the container storing device 101 has waited in the measurement request waiting state), the taking-out priority is decided on the basis of the measurement request item information and the measurement target specimen information acquired regarding each of the specimens for which the measurement request has been made (step 306). The specimen containers are taken out from the storage 204 in order of the decided taking-out priority and are mounted at container setting places on the rack 203 by the container transportation mechanism 208 (step 307). Upon completion of the mounting of the taking-out target specimen containers on the rack 203, the rack 203 is taken out from the container storing device 101 (step 308).

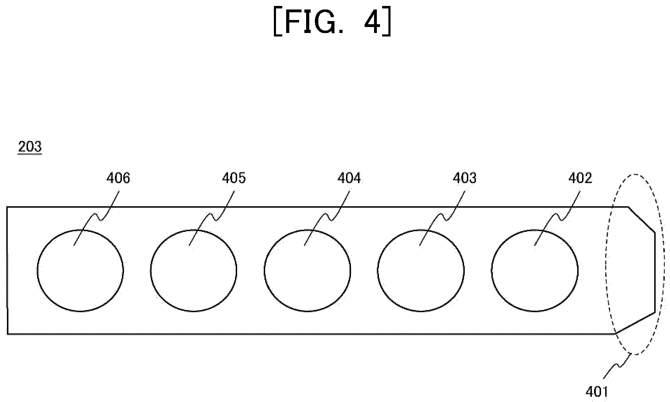

An outline of the rack 203 is depicted in FIG. 4. A notch 401 is made at the right end of the rack 203 and indicates a traveling direction of the rack 203. That is, when being transported by the transportation path, the rack 203 is placed on the transportation path such that the side on which the notch 401 exists is oriented forward in a transportation direction of the transportation path. It is to be noted that the number of container setting positions of the rack 203 is not limited to any particular number although the rack 203 includes five container setting positions 402 to 406 in this example. Further, the shape of the notch 401 indicating the traveling direction of the rack 203 is not limited to the shape depicted in FIG. 4. In addition, not only a notch but also a marking or the like may be used to indicate the transportation direction, for example.

The rack 203 is transported by the transportation path, and the specimens housed in the specimen containers mounted on the rack 203 are sucked by a dispensing mechanism included in the automatic analyzer 103 at a dispensing position in the automatic analyzer 103. The transportation path moves only in one direction. Hence, in the case of the rack 203 of FIG. 4, the specimen containers reach the dispensing position in the automatic analyzer 103 in order of the setting of the specimen containers at the container setting positions 402, 403, 404, 405, and 406, that is, in reverse order of the transportation direction of the transportation path, and the specimen housed in each specimen container is dispensed to be measured. For this reason, the specimen containers are mounted on the rack 203 such that the specimen container housing the specimen with higher taking-out priority is set at the container setting position located more forward in the transportation direction of the transportation path, that is, at the container setting position closer to the notch 401.

The same number of specimen containers as the container setting positions can be mounted on one rack. However, in a case in which there is a limit on the rack on which to mount specimen containers for each type of specimen due to settings of the automatic analyzer, it is also possible to mount specimens of the type in conformity with the limit on a designated rack. For example, it is possible to set such a limit that only calibrators or only quality control samples (QC samples) are allowed to be mounted on the same rack.

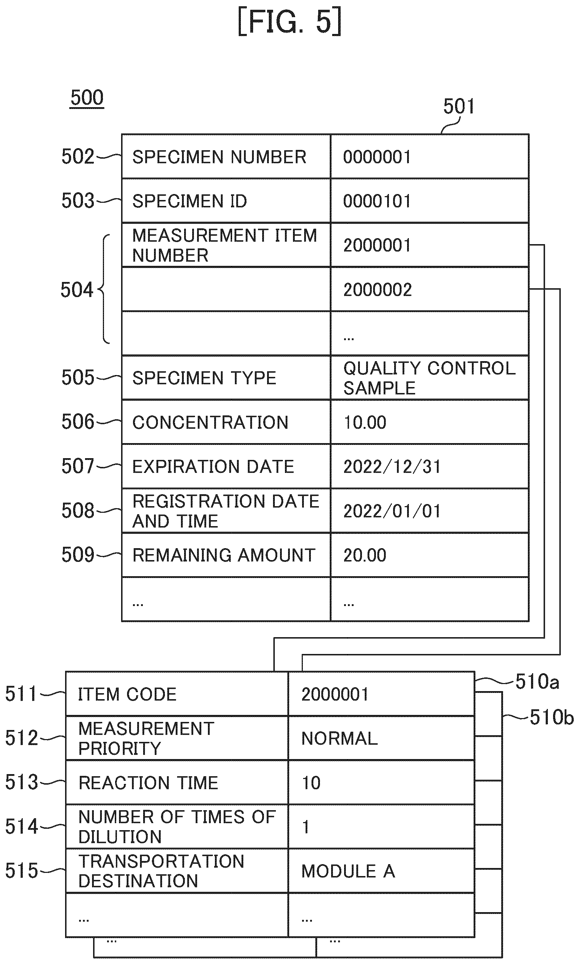

In the present embodiment, the taking-out priority of a specimen stored in the container storing device 101 is decided on the basis of information specific to the specimen. FIG. 5 is a data configuration example of a management database 500 held by the control unit 213. In a specimen information table 501, information on each specimen stored in the storage 204 is registered. A specimen number 502 is a number to identify a specimen container, and a specimen ID 503 is an ID to uniquely identify a specimen. In a case in which the specimen is a calibrator or a QC sample, a plurality of specimen containers that house the same specimen are often housed in the storage 204. In this case, although the specimen number 502 different for each specimen container is given, the specimen ID 503 is the same. A measurement item number 504 is a measurement item number regarding which a measurement request has been made for the specimen. Besides, in the specimen information table 501, information regarding a specimen type 505, concentration 506, an expiration date 507, registration date and time 508, a remaining amount 509, and the like is registered. Further, the measurement item number 504 of the specimen information table 501 is associated with a measurement information table 510 by an item code 511. In the measurement information table 510, information regarding the item code 511 to uniquely identify the measurement item, measurement priority 512, a reaction time 513, the number of times of dilution 514, a transportation destination 515, and the like is registered. Information regarding the specimen registered in the specimen information table 501 and the measurement information table 510 associated with this specimen information table 501 may be referred to as specimen-specific information.

In the present embodiment, the control unit 213 decides the taking-out priority regarding the specimens for which a measurement request has been received, on the basis of the specimen-specific information registered in the management database, and automatically transfers the specimen containers in which the specimens as the measurement targets are housed, onto the rack 203 in order of the decided taking-out priority. Each specimen container can uniquely be identified by collation between the specimen number 502 registered in the specimen-specific information and the identification information of the identification element given to the specimen container in which the specimen is housed. Accordingly, the user can not only omit procedures executed by the user oneself, such as recognition of the specimens in the specimen containers, setting of the specimen containers on the rack, and inputting of the rack to the automatic analyzer, but also mount the specimen containers on the rack in the optimum order based on the specimen-specific information. Thus, the measurement efficiency of the automatic analyzer can be improved.

### First Embodiment

A first embodiment is an example in which the taking-out priority of specimens is decided on the basis of specimen type information. The specimen type information is registered in the specimen type 505 of the specimen information table 501. In a case in which measurement requests for different specimen types such as calibrators, QC samples, and general samples simultaneously occur, the taking-out priority is decided on the basis of order of priority of the specimen type that is set in the automatic analysis system. For example, it is assumed that settings are made in the automatic analysis system such that measurement priority is given to the calibrators, the quality control samples, and the general samples in this order. When measurement requests occur regarding specimens of these specimen types, first, the calibrators for which the measurement request has occurred are all transferred onto the rack, and thereafter, the QC samples are transferred onto the rack. Similarly, after all the QC samples are transferred onto the rack, the general samples are transferred onto the rack. It is to be noted that, in a case in which there is a limit on the rack onto which specimens can be transferred, depending on the specimen type, due to settings of the automatic analysis system, the limit is obeyed.

### Second Embodiment

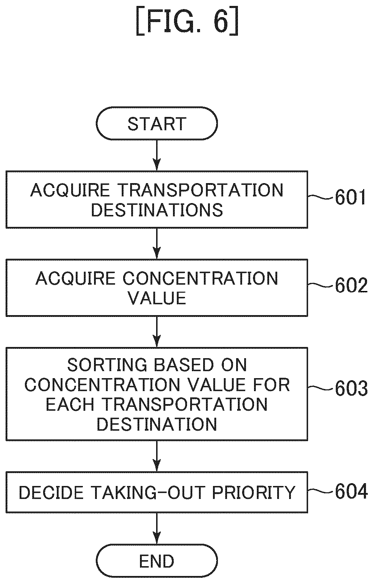

A second embodiment is an example in which the taking-out priority of specimens is decided on the basis of concentration information of the specimens. Among the specimens measured by the automatic analyzer are specimens for which a concentration value is prescribed, such as QC samples. If specimens on the same rack are consecutively measured in decreasing order of the concentration of the QC samples in the same automatic analyzer, in a case in which a phenomenon referred to as carry-over, in which a specimen is mixed into a subsequent specimen through the dispensing mechanism, has occurred, the risk of an influence on the measurement result of the mixed specimen becomes higher. The second embodiment reduces such a risk. A flowchart of an algorithm of decision of the taking-out priority of specimens on the basis of the concentration information is depicted in FIG. 6.

First, the transportation destinations of specimens as the measurement targets are acquired (step 601). Transportation destination information of the specimen is registered in the transportation destination 515 of the measurement information table 510 associated with the specimen information table 501. It is to be noted that this step can be omitted in a case in which the automatic analysis system includes only one automatic analyzer (module). Subsequently, the concentration value of the specimens is acquired from the concentration 506 of the specimen information table 501 (step 602). The specimens are sorted in order of the acquired concentration value for each transportation destination (step 603), and the taking-out priority of the specimens as the measurement targets is decided such that the highest priority is given to the specimen having the lowest concentration value regarding each transportation destination (step 604). This can reduce the influence on the measurement result due to the sample carry-over and can improve the reliability of the measurement result.

### Third Embodiment

A third embodiment is an example in which the taking-out priority of specimens is decided on the basis of the expiration date of the specimens. Among the specimens measured by the automatic analyzer are specimens regarding which the expiration date is set, such as calibrators and QC samples. Expiration date information of the specimen is registered in the expiration date 507 of the specimen information table 501. Thus, a reference to this expiration date information is made from the specimen information table 501, and the taking-out priority is decided to use the specimens in analysis sequentially from the specimen with the earliest expiration date. As a result, the specimens can be dispensed in the automatic analysis system, starting from the specimen with the earliest expiration date, and the specimens can effectively be used starting from the specimen closest to the expiration date. Thus, the operation efficiency of an examination room can be improved.

### Fourth Embodiment

A fourth embodiment is an example in which the taking-out priority of specimens is decided on the basis of the registration date and time of the specimens. Among the specimens measured by the automatic analyzer are specimens for which the date and time of registration in the container storing device 101 is registered. Registration date and time information of the specimen is registered in the registration date and time 508 of the specimen information table 501. Hence, a reference to this registration date and time information is made from the specimen information table 501, and the taking-out priority is decided to use the specimens in analysis sequentially from the specimen with the earliest registration date and time. As a result, the specimens can be dispensed in the automatic analysis system, starting from the specimen with the earliest registration date and time, and the specimens can effectively be used starting from the specimen registered earlier even when the same specimens are stored in the container storing device 101. Thus, the operation efficiency of the examination room can be improved.

### Fifth Embodiment

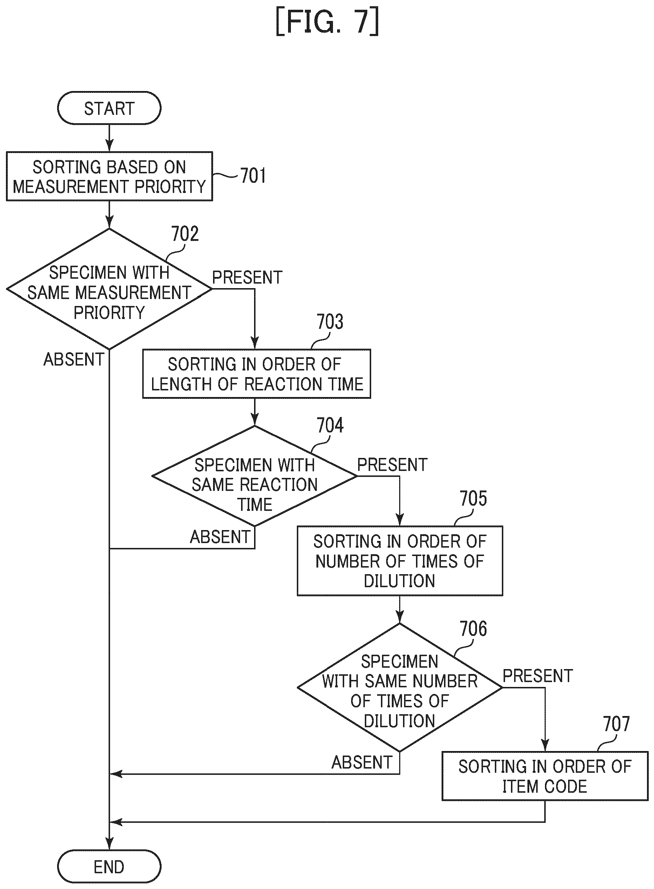

A fifth embodiment is an example in which the taking-out priority of specimens is decided on the basis of the measurement item information relating to a measurement request. Various pieces of information relating to the measurement request are registered in the measurement information table 510. A flowchart of an algorithm of decision of the taking-out priority of specimens on the basis of the measurement item information is depicted in FIG. 7.

First, measurement priority is acquired from measurement request information of the specimens as the measurement targets, and the specimens are sorted in decreasing order of the acquired measurement priority (step 701). The measurement priority of the specimen is registered in the measurement priority 512 of the measurement information table 510 associated with the specimen information table 501. When there is no other specimen with the same measurement priority ("absent" in a step 702), the taking-out priority is decided according to the measurement priority. On the other hand, when there is another specimen with the same measurement priority ("present" in the step 702), the specimens with the same measurement priority are sorted in decreasing order of length of the reaction time (step 703). The reaction time of the specimen is registered in the reaction time 513 of the measurement information table 510 associated with the specimen information table 501. When there is no other specimen with the same reaction time ("absent" in a step 704), the taking-out priority is decided according to the measurement priority and the reaction time. On the other hand, when there is another specimen with the same reaction time ("present" in the step 704), the specimens with the same measurement priority and the same reaction time are sorted in decreasing order of the number of times of dilution (step 705). The number of times of dilution of the specimen is registered in the number of times of dilution 514 of the measurement information table 510 associated with the specimen information table 501. When there is no other specimen with the same number of times of dilution ("absent" in a step 706), the taking-out priority is decided according to the measurement priority, the reaction time, and the number of times of dilution. On the other hand, when there is another specimen with the same number of times of dilution ("present" in the step 706), the taking-out priority is decided by sorting the specimens with the same measurement priority, the same reaction time, and the same number of times of dilution in order of the item code (step 707) .

The measurement priority is set according to, for example, the order of the measurement priority of test items requested to be measured. Among the test items are ones required to be measured with priority over the other test items. The specimen container in which the specimen for which such a test item with high priority is requested is housed is recognized as the specimen to be taken out with high priority. Accordingly, measurement can be executed sequentially from measurement with the highest priority. Moreover, the time required for measurement is long for the measurement item with a long reaction time or a large number of times of dilution. The specimen container in which the specimen for which such a test item requiring a long measurement time is requested is housed is recognized as the specimen to be taken out with high priority. Accordingly, measurement can be executed sequentially from measurement with the longest measurement time.

As above, the taking-out priority of the specimens as the measurement targets is decided on the basis of the measurement item information of the specimens to be taken out. Accordingly, mounting of the specimen containers on the rack according to the setting of test items can be achieved without awareness by the user, and dispensing of the specimen regarding the test item with higher priority can be started earlier. Further, dispensing can be started from the test item with the longest measurement time among the requested test items, and the measurement can be completed in the shortest time as a whole. Therefore, the measurement efficiency of the automatic analysis system can be improved.

### Sixth Embodiment

A sixth embodiment is an example in which, when a reference to measurement results of calibrators or QC samples relating to a measurement item requested for an urgent sample is made and these measurement results are invalid or measurement has not been executed, the taking-out priority about such calibrators or QC samples is decided to be high priority.

The urgent sample refers to a sample to be measured with priority higher than that of other general samples. In a case in which a measurement request of an urgent sample occurs, measurement of the urgent sample is executed while interrupting measurement of general samples that have not been measured. At this time, the measurement of the urgent sample is not executed in some cases if the calibration result of the test item requested for this urgent sample is invalid or measurement of the QC sample of this test item has not been executed.

When receiving a measurement request about the urgent sample, the system control unit 104 checks the status of calibration and quality control of the measurement request item, and generates a measurement request of the necessary calibrator or QC sample as needed, prior to the measurement request of the urgent sample. In the container storing device 101, the taking-out priority about the calibrator or the QC sample based on such a measurement request is decided to be high priority. Accordingly, the calibration or quality control regarding the measurement item requested for the urgent sample is started early. This can reduce the standby time until the measurement completion of the calibrator or the QC sample, and measurement of samples with high urgency can be executed early.

### Seventh Embodiment

A seventh embodiment is an example in which the taking-out priority of specimens is decided on the basis of the measurement item information relating to a measurement request. This is an example in which, in the case of a measurement request that requires consecutive measurement of a plurality of specimens, the taking-out priority of the specimens is decided in order of the measurement.

Real-time QC exists as an example of the measurement request that requires consecutive measurement of a plurality of specimens. In the real-time QC, QC samples with different concentrations are consecutively measured. In such a case, the taking-out priority is decided in order of the measurement of the QC samples.

Accordingly, the specimens for which the consecutive measurement is to be executed are mounted on the rack at the container setting positions in order of the measurement. This can mount the specimen containers on the rack that allows execution of measurement requiring the plurality of specimens, without awareness by the user, and thus improve the convenience for the user.

### Eighth Embodiment

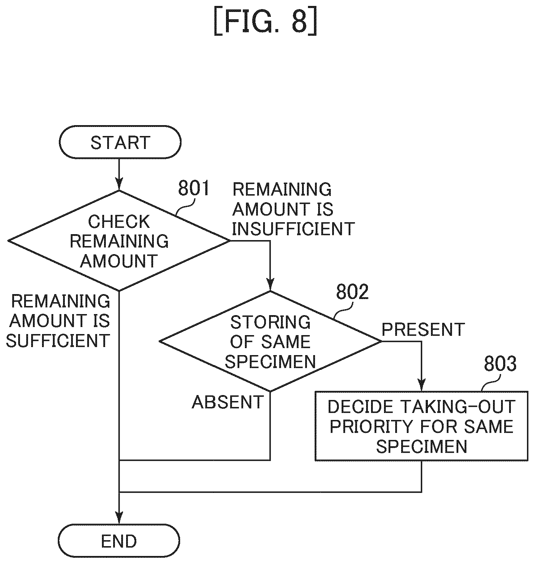

An eighth embodiment is an example in which the taking-out priority of specimens is decided in a case in which the remaining amount of a specimen is insufficient. A flowchart of an algorithm of decision of the taking-out priority of specimens based on the remaining amount is depicted in FIG. 8.

The use amount of the specimen used in measurement requested for the specimen as the measurement target is compared with the remaining amount of the specimen as the measurement target (step 801). The remaining amount of the specimen is registered in the remaining amount 509 of the specimen information table 501. When the remaining amount is larger than the use amount, the decision of the taking-out priority based on the remaining amount is not executed. On the other hand, when the remaining amount is equal to or smaller than the use amount, a search is made to check whether the same specimen is stored in the container storing device 101 (step 802). The sameness of specimens can be determined by the specimen ID 503 of the specimen information table 501. When the same specimen is not stored, it is deemed that the remaining amount is insufficient regarding this specimen, and an alarm is displayed. When the same specimen is stored, the taking-out priority of the specimen container in which the same specimen stored is housed is decided to be the priority next to the taking-out priority of the specimen container in which the specimen with the insufficient remaining amount is housed (step 803). Accordingly, the measurement target specimen that has not been used is mounted at the container setting position next to the container setting position at which the specimen container in which the specimen with the insufficient remaining amount is housed is set. Therefore, even when the remaining amount of the specimen as the measurement target is insufficient in the measurement, the same specimen can be used from the specimen container set at the next container setting position. Thus, the measurement efficiency of the automatic analysis system can further be improved.

It is to be noted that, although the example in which the sameness of specimens is determined by the specimen ID in the step 802 has been described here, it may also be determined that the specimens are the same when the lot numbers of the specimens are also the same in addition to the sameness of the specimen ID.

### Ninth Embodiment

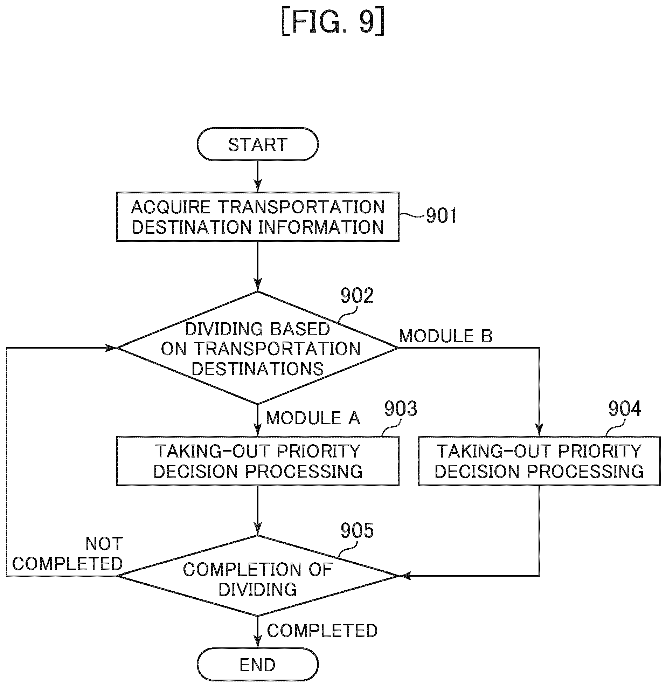

A ninth embodiment is an example in which the taking-out priority is decided in the automatic analysis system including a plurality of automatic analyzers (modules). The taking-out priority of specimens is decided for each transportation destination, and the specimen containers that house specimens as examination targets are mounted on racks different for each transportation destination in order of the taking-out priority. A flowchart of an algorithm of decision of the taking-out priority of specimens for each transportation destination module is depicted in FIG. 9. It is to be noted that the number and the kind of transportation destinations are not limited to any particular ones although an example in which the automatic analysis system includes two automatic analyzers, i.e., module A and module B, is depicted here.

First, the transportation destination information is acquired from the measurement request information of the specimens as the measurement targets (step 901). The transportation destination information of the specimen is registered in the transportation destination 515 of the measurement information table 510 associated with the specimen information table 501. Division of specimens based on the transportation destinations is executed in reference to the acquired transportation destination information (step 902). Taking-out priority decision processing is executed regarding the specimens to be transported to module A (step 903). Similarly, the taking-out priority decision processing is executed regarding the specimens to be transported to module B (step 904). It is determined whether the division of all the specimens as measurement targets has been completed (step 905). A return to the step 902 is made when the division has not been completed, and the taking-out priority decision processing is ended when the division has been completed.

Accordingly, the specimens to be transported to each transportation destination can be collected to be mounted on the same rack. This can limit the destination of the rack. Thus, by the flow composed of taking-out from the container storing device 101, analysis in the automatic analyzer 103, and taking-in to the container storing device 101, the time for which the specimens taken out from the container storing device 101 are exposed to the ordinary temperature can be reduced, and the quality of the specimens can be kept.

It is to be noted that it is also possible to use one rack for a plurality of transportation destinations although the example in which the racks different for each transportation destination are used has been described in the ninth embodiment. In this case, for example, assuming that the transportation destinations are modules A and B, in one rack used for transportation, a plurality of specimen containers to be transported to module A and a plurality of specimen containers to be transported to module B need to each be mounted on the rack in order of transportation priority. Meanwhile, the order of priority between the modules does not need to be set. That is, even when the rack is transported to modules A and B in this order, the specimen containers to be transported to module B may be mounted at the container setting positions located forward in the transportation direction of the transportation path relative to the specimen containers to be transported to module **A.**

The present invention has been described above with use of the embodiments. It is to be noted that the present invention is not limited to the above-described embodiments and includes various modifications. For example, the above-described embodiments have been explained in detail in order to explain the present invention in an easy-to-understand manner, and are not necessarily limited to ones including all the configurations explained. Further, it is also possible to add part of a configuration of a certain embodiment to a configuration of another embodiment. In addition, it is possible to execute, for part of each embodiment, addition, deletion, or replacement of another configuration.

For example, in the present embodiment, the description has been given of the example in which the container storing device is connected to one or more automatic analyzers (modules) through the transportation path to configure the automatic analysis system. However, it is also possible to configure the container storing device as one block of the automatic analyzer (module). Also in this case, by similarly taking out specimen containers from the container storing device onto a rack in order of the transportation priority, the automatic analyzer can efficiently execute measurement by only executing dispensing in order of the mounting on the rack in the automatic analyzer, without executing identification of each specimen by an identification element given to each specimen container in a subsequent step and executing a designation by the user for causing the automatic analyzer to recognize the specimen mounted on the rack. In this case, control of transportation and taking-out of specimen containers to the container storing device is executed by a control unit included in the container storing device or the automatic analyzer.

### Description of Reference Characters

101: Container storing device
102: Container taking-in/out device
103: Automatic analyzer
104: System control unit
105: Taking-in path
106: Taking-out path
107, 108: Transportation path
201, 202: Transportation path
203: Rack
204: Storage
205: Mounting path
206: Transportation mechanism
207: Identification information reading device
208: Container transportation mechanism
209: Identification information reading device
210: Container housing place
211: Opening
212: Shutter
213: Control unit
401: Notch
402, 403, 404, 405, 406: Container setting position
500: Management database
501: Specimen information table
502: Specimen number
503: Specimen ID
504: Measurement item number
505: Specimen type
506: Concentration
507: Expiration date
508: Registration date and time
509: Remaining amount
510: Measurement information table
511: Item code
512: Measurement priority
513: Reaction time
514: Number of times of dilution
515: Transportation destination

## Claims

1. A container storing device connected to an automatic analyzer through a transportation path that transports a rack, the container storing device comprising:
a storage that stores specimen containers in which specimens to be measured by the automatic analyzer are housed;
a container transportation mechanism that takes out the specimen containers from the storage onto the rack or houses the specimen containers from the rack into the storage; and
a control unit that executes control to take out the specimen containers from the storage, wherein
the transportation path transports the rack in a direction from the container storing device toward the automatic analyzer,
the rack includes a plurality of container setting positions at which the specimen containers are to be set, and
the control unit is configured to decide, after a plurality of taking-out target specimen containers in which specimens for which a measurement request has been made from the automatic analyzer are housed become capable of being taken out, taking-out priority regarding the plurality of taking-out target specimen containers and execute control such that the taking-out target specimen container having higher taking-out priority is mounted on the rack at the container setting position located more forward in a transportation direction of the transportation path.

2. The container storing device according to claim 1, wherein
the control unit includes a management database in which specific information on specimens stored in the storage is registered, and is configured to decide the taking-out priority on a basis of the specific information regarding a plurality of specimens for which the measurement request has been made, and
the specific information on a specimen is information regarding the relevant specimen, the information being registered in a specimen information table and a measurement information table associated with the specimen information table.

3. The container storing device according to claim 2, wherein
a type of the specimens is registered in the specimen information table, and
the control unit is configured to decide the taking-out priority on a basis of the type of specimens for which the measurement request has been made.

4. The container storing device according to claim 2, wherein
concentration of the specimens is registered in the specimen information table, and
the control unit is configured to decide the taking-out priority on a basis of the concentration of specimens for which the measurement request has been made.

5. The container storing device according to claim 2, wherein
an expiration date of the specimens or registration date and time when the specimens are registered in the container storing device is registered in the specimen information table, and
the control unit is configured to decide the taking-out priority on a basis of the expiration date or the registration date and time of specimens for which the measurement request has been made.

6. The container storing device according to claim 2, wherein
measurement priority of the specimens is registered in the measurement information table associated with the specimen information table, and
the control unit is configured to decide the taking-out priority on a basis of the measurement priority of specimens for which the measurement request has been made.

7. The container storing device according to claim 2, wherein
a calibrator or a quality control sample is included as a specimen stored in the storage, and,
in a case in which the measurement request is a request for an urgent sample and measurement of the calibrator or the quality control sample relating to a measurement item for the urgent sample is invalid or the measurement has not been executed, the control unit is configured to decide the taking-out priority of the calibrator used for calibration or the quality control sample used for quality control regarding the measurement item for the urgent sample, as high priority.

8. The container storing device according to claim 2, wherein,
in a case in which the measurement request is a measurement item that requires consecutive measurement of a plurality of specimens, the control unit is configured to decide the taking-out priority in order of the consecutive measurement of the specimens.

9. The container storing device according to claim 2, wherein
a remaining amount of the specimens is registered in the specimen information table, and
the control unit is configured to decide, in a case in which the remaining amount of a specimen for which the measurement request has been made is insufficient and another specimen container that houses a specimen same as the specimen for which the measurement request has been made is stored in the storage, the taking-out priority of the other specimen container as priority next to the taking-out priority of the specimen container that houses the specimen regarding which the remaining amount is insufficient and for which the measurement request has been made.

10. The container storing device according to claim 2, wherein
a first automatic analyzer and a second automatic analyzer are connected to the container storing device,
an automatic analyzer that is a transportation destination of the specimens is registered in the measurement information table associated with the specimen information table, and
the control unit is configured to decide the taking-out priority such that a specimen container that houses a specimen for which the measurement request from the first automatic analyzer has been made and a specimen container that houses a specimen for which the measurement request from the second automatic analyzer has been made are mounted on different racks.

11. An automatic analysis system comprising:
an automatic analyzer; and
a container storing device connected to the automatic analyzer through a transportation path that transports a rack, wherein
the container storing device includes a storage that stores specimen containers in which specimens to be measured by the automatic analyzer are housed, a container transportation mechanism that takes out the specimen containers from the storage onto the rack or houses the specimen containers from the rack into the storage, and a control unit that executes control to take out the specimen containers from the storage,
the transportation path transports the rack in a direction from the container storing device toward the automatic analyzer,
the rack includes a plurality of container setting positions at which the specimen containers are to be set,
the control unit of the container storing device is configured to decide, after a plurality of taking-out target specimen containers in which specimens for which a measurement request has been made from the automatic analyzer are housed become capable of being taken out, taking-out priority regarding the plurality of taking-out target specimen containers and execute control such that the taking-out target specimen container having higher taking-out priority is mounted on the rack at the container setting position located more forward in a transportation direction of the transportation path, and
the automatic analyzer dispenses the specimens housed in the specimen containers set at the plurality of container setting positions on the rack, in decreasing order of the taking-out priority.

12. The automatic analysis system according to claim 11, wherein
the control unit of the container storing device includes a management database in which specific information on specimens stored in the storage is registered, and is configured to decide the taking-out priority on a basis of the specific information regarding a plurality of specimens for which the measurement request has been made, and
the specific information on a specimen is information regarding the relevant specimen, the information being registered in a specimen information table and a measurement information table associated with the specimen information table.

13. A method of taking out specimen containers from a container storing device,
the container storing device including a storage that stores specimen containers in which specimens to be measured by an automatic analyzer are housed, and a container transportation mechanism that takes out the specimen containers from the storage onto a rack including a plurality of container setting positions at which the specimen containers are to be set or that houses the specimen containers from the rack into the storage,
the method comprising:
deciding, after a plurality of taking-out target specimen containers in which specimens for which a measurement request has been made by the automatic analyzer are housed become capable of being taken out, taking-out priority regarding the plurality of taking-out target specimen containers; and
deciding the container setting positions on the rack at which the taking-out target specimen containers are to be mounted, on a basis of the taking-out priority.

14. The method of taking out specimen containers according to claim 13, wherein
the automatic analyzer or the container storing device includes a control unit that executes control to take out the specimen containers from the storage,
the control unit includes a management database in which specific information on specimens stored in the storage is registered, and is configured to decide the taking-out priority on a basis of the specific information regarding a plurality of specimens for which the measurement request has been made, and
the specific information on a specimen is information regarding the relevant specimen, the information being registered in a specimen information table and a measurement information table associated with the specimen information table.
